## Europäisches Patentamt

## European Patent Office

## Office européen des brevets

(19)

(11) Veröffentlichungsnummer: **0 066 269**
**B1**

(12)

# EUROPÄISCHE PATENTSCHRIFT

(45) Veröffentlichungstag der Patentschrift:
**27.08.86**

(51) Int. Cl.⁴: **B 62 D 13/02**, B 62 D 53/00

(21) Anmeldenummer: **82104662.0**

(22) Anmeldetag: **27.05.82**

(54) **Zugverbindung für einen Lastzug.**

(30) Priorität: **01.06.81 DE 3121745**

(43) Veröffentlichungstag der Anmeldung:
**08.12.82 Patentblatt 82/49**

(45) Bekanntmachung des Hinweises auf die Patenterteilung:
**27.08.86 Patentblatt 86/35**

(84) Benannte Vertragsstaaten:
**AT BE CH DE FR IT LI LU NL**

(56) Entgegenhaltungen:
**DE - U - 7 925 852**
**US - A - 3 254 905**

(73) Patentinhaber: **Karl Kässbohrer Fahrzeugwerke GmbH,
Peter-Schmid-Strasse 13, D-7900 Ulm (Donau) (DE)**

(72) Erfinder: **Helmer, Bernd, Pfuhler Strasse 32,
D-7910 Neu-Ulm (DE)**

(74) Vertreter: **Patentanwälte Grünecker, Dr. Kinkeldey, Dr.
Stockmair, Dr. Schumann, Jakob, Dr. Bezold, Meister,
Hilgers, Dr. Meyer-Plath, Maximilianstrasse 58,
D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Zugverbindung für einen Lastzug, der einen wenigstens zweiachsigen Motorwagen und einen wenigstens zweiachsigen Anhänger umfasst, dessen Vorderachse ein Drehgestell mit einem ersten Drehring aufweist, dem im Vorderachsbereich ein zweiter Drehring zugeordnet ist, der zum Zwecke der Abstandsverkürzung zwischen dem Motorwagen und dem Anhänger über eine verkürzte Zuggabel die Zugverbindung zum Motorwagen herstellt.

Es ist bekannt, dass der Gesetzgeber für Lastzüge eine maximale Gesamtlänge vorschreibt, die nicht überschritten werden darf. Sofern man deshalb beabsichtigt, Lastzüge mit grösserem Laderaum zu schaffen, gilt es, den Abstand zwischen dem Motorwagen und dem Anhänger zu verkürzen und den dadurch gewonnenen Raum entweder dem Motorwagen oder dem Anhänger zuzuschlagen. Einem derartigen Verlangen stehen aber einige Hindernisse im Wege. Zunächst muss darauf geachtet werden, dass ein Lastzug auch mit verkürztem Abstand kurventauglich bleibt. Die Abstandsverkürzung soll nicht dazu führen, dass mit dem neuen Lastzug keine engen Kurven mehr befahren werden können.

Das gleiche gilt auch für die Nickbewegungen zwischen Motorwagen und Anhänger. Auch hier muss darauf geachtet werden, dass trotz der Abstandsverkürzung noch soviel Platz verbleibt, dass der Lastzug, zugeschnitten auf sein Einsatzgebiet, noch die notwendigen Nickbewegungen bei Überfahren von Mulden usw. mitmachen kann.

Ganz wichtig ist, dass der Lastzug nach wie vor trotz der Abstandsverkürzung gut manövrierfähig bleibt, und zwar auch bei dem für das Rangieren unbedingt notwendigen Rückwärtsfahren.

Die Verkürzung des Abstands zwischen dem Motorwagen und dem Anhänger dient nicht nur zur Vergrösserung des Laderaumes, sie ist auch für die Verringerung der Wirbelbildung in dem bewussten Zwischenraum zwischen dem Motorwagen und dem Anhänger interessant, und verringert dadurch den Cw Wert des Lastzuges.

Eine Zugverbindung der eingangs genannten Art ist aus dem deutschen Gebrauchsmuster 7 925 852 bekannt. Bei dieser Ausführung wird eine Verkürzung des Zwischenraumes zwischen Motorwagen und Anhänger dadurch ermöglicht, dass die Zuggabel als starre Verbindung zwischen dem Motorwagen und dem Anhänger eingesetzt wird. Die Zuggabel ist trapezförmig ausgebildet und ist sowohl am Motorwagen als auch am Anhänger um jeweils eine horizontale Achse nickbar gelagert, wobei sie beim Anhänger am zweiten Drehring angelenkt ist.

Auf diese Weise wird bei Kurvenfahrten vermieden, dass das Vorderende des Anhängers zur Innenseite der Kurve hin läuft, wodurch bekanntlich der Abstand zwischen dem Motorwagen und dem Anhänger so beträchtlich verkürzt wird, dass bei einem normalen Lastzug üblicherweise eine Zuggabel mit 1,500 mm Länge notwendig ist.

Bei der bekannten Lösung ist die Vorderachse des Anhängers zwangsgelenkt. Hierzu dienen die beiden Drehkränze. Die Zwangslenkung der Vorderachse erfolgt unter Verwendung von Gestängen, die beim Kurvenfahren das Abknicken des Anhängers gegenüber dem Motorwagen über einen Umlenkhebel umsetzen auf die Vorderachse des Hängers.

Die bekannte Lösung ermöglicht es zwar, den Abstand zwischen dem Motorwagen und dem Anhänger auf etwa 700 mm zu verringern, sie hat indes einige Nachteile, die den Einsatz des bekannten Lastzuges erschweren.

Die zwangsgelenkte Vorderachse ist in der Herstellung teuer und weist zudem den Nachteil auf, dass sie mit ihren Gestängen auf die Konstruktion des Motorwagens und des Anhängers abgestimmt werden muss. Da die Anlenkung der Achse vom Einschlagwinkel des Anhängers abhängig ist und dieser Einschlagwinkel wiederum je nach Radstand und hinterem Überhang des Motorwagens verschieden ist, kann praktischerweise ohne Anpassung der Zwangslenkung ein bestimmter Anhänger nur jeweils mit einem ihm zugeordneten oder im wesentlichen baugleichen Motorwagen gefahren werden. Ein Motorwagen jedoch mit einem kürzeren oder längeren Überhang am Heck würde das Lenkverhalten des Hängers so verfälschen, dass dieser zwangsweise in den Kurven mit den Rädern radiert.

Der vorliegenden Erfindung liegt die Aufgabe zugrunde, eine Zugverbindung der eingangs genannten Art zu schaffen, bei der auf einfache und kostengünstige Weise der Abstand zwischen dem Motorwagen und dem Anhänger verkürzt ist und der Lastzug dennoch voll manövrierfähig bleibt.

Diese Aufgabe wird erfindungsgemäss dadurch gelöst, dass am Heck des Motorwagens seitensteif ein Lenker gelagert ist, der in einer zur Zuggabel in etwa parallelen Ebene nach rückwärts führt und an seinem freien Ende einen in Richtung der Längsmittenachse des Motorwagens teleskopartig verfahrbaren Endabschnitt mit einem auf der Längsmittenachse befindlichen Schwenklager aufweist, mit dessen Hilfe er mit dem Drehgestell der Vorderachse um eine vertikale und horizontale Achse verschwenkbar verbunden ist, und dass die Zuggabel in an sich bekannter Art am Motorwagen angekuppelt ist.

Die erfindungsgemässe Konstruktion ist einfach aufgebaut und funktionssicher. Die serienmässige Zuggabel ist lediglich zur Übertragung von Zug- und Schubkräften notwendig. Sie kann am Heck des Motorwagens in der dort üblicherweise vorhandenen Anhängerkupplung eingehängt werden. Sie ist jedoch gegenüber den normalen, handelsüblichen Zuggabeln um mehr als die Hälfte der Gesamtlänge verkürzt. Um dieses Mass kann z.B. der Anhänger verlängert werden.

Da die Zuggabel in die normale Anhängerkupplung des Motorwagens einhängbar ist, kann der Motorwagen auch mit anderen Anhängern gefahren werden, deren Abstand zum Motorwagen nicht verkürzt ist.

Der vom Heck des Motorwagens nach rückwärts gerichtete Lenker bindet das Vorderende des Anhängers am Heck des Motorwagens so an, dass dieser im wesentlichen hinter dem Heck des Motorwagens herläuft und bei Kurvenfahrten allenfalls geringfügig zur Kurveninnenseite hin einschwenken kann. Der Lenker hat lediglich die Aufgabe, den Anhänger bei Kurvenfahrten zu lenken, er überträgt keine Zug- oder Schubkräfte. Er greift über das Schwenklager direkt am Drehgestell der Vorderachse des Anhängers an.

Um dem Lenker bei seiner Verbindung mit dem Drehgestell der Hängervorderachse die notwendige Freiheit zu geben, gibt es mehrere Lösungen. Eine sehr einfache Konstruktion ergibt sich dann, wenn der Lenker an seinem freien Ende einen in Richtung der Längsmittelachse des Motorwagens teleskopartig verfahrbaren Endabschnitt aufweist, der das Schwenklager trägt. Auf diese Weise können die insbesondere bei Kurvenfahrten auftretenden Ausgleichsbewegungen in Richtung der Längsmittelachse erfolgen.

Auch bei dem Fall, wo der Lastzug mit fluchtendem Motorwagen und Anhänger auf der Strasse steht und aus dieser gestreckten Lage eine Kurve befahren soll, kann die Vorderachse des Hängers nicht beschädigt werden, da in diesem Fall der Lenker zusammen mit dem Heck des Motorwagens ausschwenkt und das Drehgestell der Hängervorderachse so einstellt, dass auch in diesem Zustand der Hänger bereits die Kurve ohne Radieren der Räder mitfährt.

Bei der erfindungsgemässen Konstruktion ergibt sich der Vorteil, dass der Anhänger bei Kurvenfahrten zwar im wesentlichen gezwungen wird, mit seinem Vorderende dem Heck des Motorwagens zu folgen, dass aber die Vorderachse des Anhängers sich selbsttätig auf den bei der Kurvenfahrt für den Motorwagen und den Anhänger gemeinsamen Krümmungsmittelpunkt einstellen kann.

Bei einer vorteilhaften Weiterbildung der Erfindung ist vorgesehen, dass die Zuggabel die an sich bekannte Dreiecksform aufweist und mit der Basis des Dreiecks am Befestigungselement vertikal um eine horizontale Achse verschwenkbar gelagert ist. Diese Ausgestaltung macht es möglich, die bekannte Form der Zuggabel beizubehalten, wenngleich in verkürzter Form. Auch die Art der verschwenkbaren Gabellagerung kann beibehalten werden.

Mit Rücksicht auf das Ankuppeln sowohl der Zuggabel als auch des Lenkers ist es vorteilhaft, wenn der Endabschnitt gegenüber dem restlichen Lenker im Sinne einer Abstandsvergrösserung zum Heck des Motorwagens hin kraftbeaufschlagt ist. Auf diese Weise gelangt beim Ankuppeln zunächst der Lenker in seine Kupplungsstellung, sodann der Zugwagen. Darüber hinaus wird durch die Anstellkraft das Spiel aus der Lenkerverbindung genommen.

Um das Ankuppeln des Hängers an den Motorwagen zu erleichtern, ist es günstig, wenn am Heck des Motorwagens für die Anlenkung der Zuggabel und des Lenkers Schnellkupplungen vorgesehen sind.

Eine einfache Ausgestaltung des Lenkers ergibt sich dann, wenn er unterhalb der Zuggabel angeordnet ist.

Mit Rücksicht auf ein stabiles Fahrverhalten ist es vorteilhaft, wenn der Lenker über Lenkungsdämpfer am Drehgestell abgestützt ist.

Ebenfalls für die Fahrstabilität ist es von Vorteil, wenn die Drehachse des zweiten Drehrings in Richtung der Längsmittelachse in Fahrtrichtung gesehen vor Mitte Vorderachse liegt.

Für das Lenkverhalten, insbesondere beim Rückwärtsfahren ist es günstig, wenn der Anlenkpunkt des Schwenklagers bei fluchtendem Motorwagen und Anhänger zwischen Anhängerkupplung des Motorwagens und der Drehachse des ersten oder zweiten Drehrings des Anhängers liegt. Hierbei ist es auch günstig, wenn der Anlenkpunkt des Schwenklagers in Fahrtrichtung gesehen vor einer durch die Anhängerschwenkachse der Zuggabel definierten vertikalen Ebene liegt.

Ein Ausführungsbeispiel der Erfindung ist nachfolgend anhand einer Zeichnung beschrieben. Es zeigt:

Fig. 1 die Seitenansicht des Hecks eines Motorwagens und des Vorderendes eines damit verbundenen Anhängers,

Fig. 2 die Draufsicht auf die Fahrzeuge von Fig. 1, wobei der Motorwagen mit dem Anhänger fluchtet, und

Fig. 3 eine Draufsicht auf die Fahrzeuge von Fig. 1, wobei sich Motorwagen und Anhänger in einer Kurve befinden.

In der Zeichnung ist ein Lastzug 1 mit einem Motorwagen 2 und einem Anhänger 3 gezeigt. Bei dem Motorwagen handelt es sich um eine übliche Ausführung mit einer gelenkten Vorderachse und einer Antriebsachse 4. Das Chassis weist unter anderem zwei Längsträger 5 auf, die am Heck des Motorwagens über einen Querträger 6 miteinander verbunden sind. An dem Querträger ist eine handelsübliche Anhängerkupplung 7 befestigt.

Auch der Anhänger ist von üblicher Art und besitzt eine Vorderachse 8 mit einem Drehgestell 9, sowie eine nicht gezeigte Hinterachse.

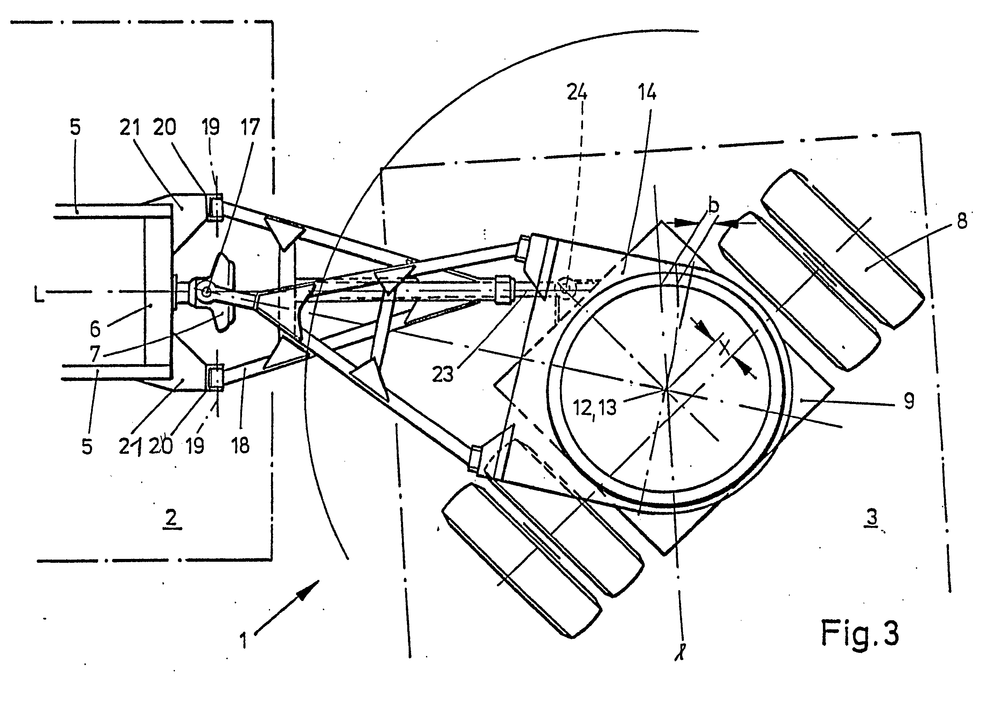

Die Vorderachse 8 weist einen Nachlauf x zu den Drehachsen zweier Drehringe 10 und 11 auf. Der erste Drehring 10 ist im vorliegenden Fall gleich gross wie der zweite Drehring 11 gestaltet. Die jeweiligen vertikalen Drehachsen 12 und 13 sind koaxial zueinander ausgerichtet und befinden sich wie die Fig. 3 zeigt auf der Längsmittenachse 2 des Anhängers. Bei fluchtender Anordnung des Motorwagens und des Anhängers liegen diese Achsen auch auf der Längsmittenachse L des Motorwagens.

Der untere Drehring 12 stellt die Drehbeweglichkeit des Drehgestells 9 sicher. Zwischen dem unteren Drehring 12 und dem oberen Drehring 13 ist ein Zwischenring 14 vorhanden. Auf dem oberen Drehring 13 stützt sich das Chassis des Anhängers ab.

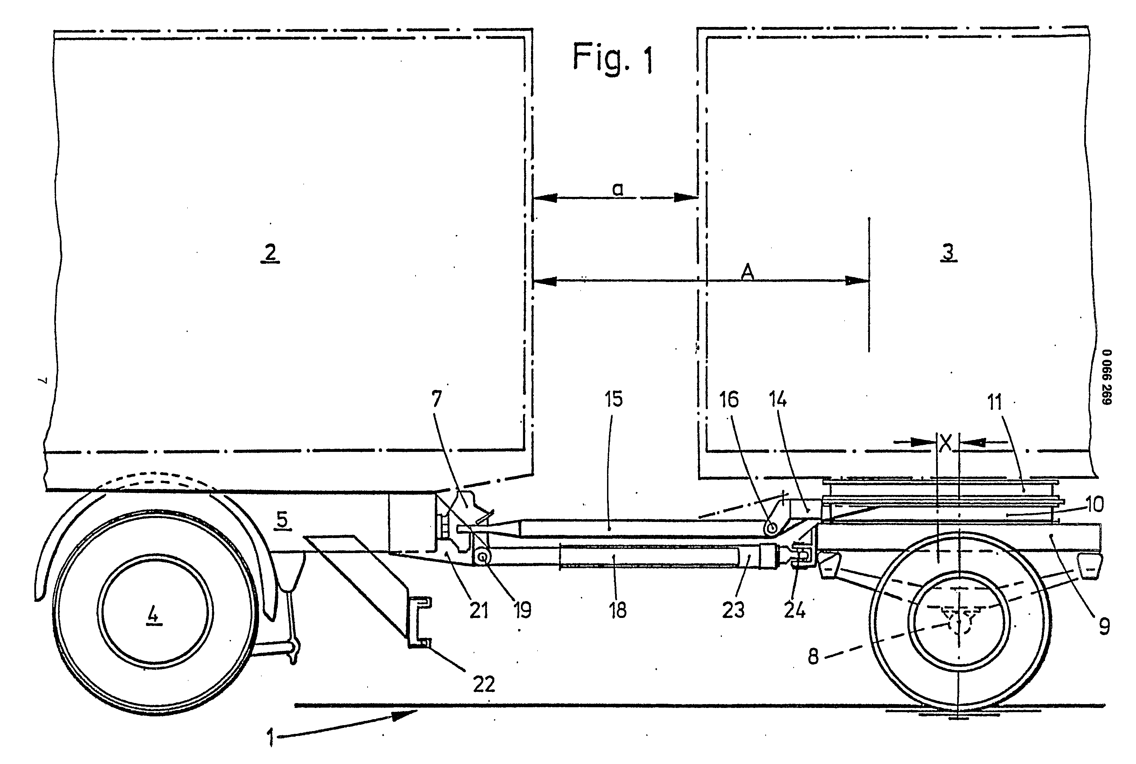

Für die Übertragung der Zug- und Schubkräfte zwischen dem Motorwagen 2 und dem Anhänger 3 dient eine Zuggabel 15, die gegenüber den handelsüblichen Zuggabeln um das Mass A–a verkürzt ist. Der Abstand A zeigt in Fig. 1 den normalen Abstand zwischen dem Heck des Motorwagens 2 und dem Hänger 3 bei unverkürzter Zuggabel. Der Abstand a ist bei der erfindungsgemässen Konstruktion gegeben und liegt bei etwa 700 mm. Die Zuggabel ist in an sich bekannter Weise dreiecksförmig gestaltet, wobei sie mit der Basis des Dreiecks am Zwischenring 14 vertikal um eine horizontale Achse 16 verschwenkbar gelagert ist. Die Zuggabel ist an ihrem freien Ende mit der üblichen Öse 17 versehen, mit Hilfe welcher sie in die Anhängerkupplung 7 einhängbar ist. Der Anhänger ist im vorliegenden Fall mit seiner Ladefläche um das Mass A–a verlängert.

Unterhalb der Zuggabel in einer zu dieser etwa parallelen Ebene ist ein Lenker 18 vorhanden, der vom Heck des Motorwagens 2 nach rückwärts führt. Der Lenker ist dreiecksförmig gestaltet und mit der Basis des Dreiecks am Heck des Motorwagens vertikal um eine horizontale Achse 19 verschwenkbar gelagert. Die entsprechenden Gelenklager 20 sind unterhalb und seitlich der Anhängerkupplung 7 angeordnet und mit Hilfe von Trägern 21 an den Chassis-Längsträgern 5 bzw. dem Querträger 6 befestigt. Unterhalb dieser Anordnung ist beim Motorwagen noch ein Unterfahrschutz 22 vorgesehen. Die Gelenklager 20 sind um einen geringen Betrag näher an das Heck des Motorwagens angeordnet, als der Gelenkpunkt der Anhängerkupplung 7.

Der Lenker 18 ist in der horizontalen Ebene seiner Dreiecksform seitensteif ausgebildet und besitzt im vorliegenden Fall an seinem freien Ende einen teleskopartig in Richtung der Längsmittelachse L des Motorwagens verfahrbaren Endabschnitt 23. Derselbe besitzt an seinem dem Anhänger zugewandten Ende ein auf der besagten Längsmittelachse L befindliches Schwenklager 24 mit Hilfe welcher er seine Lenkverbindung herstellt mit dem Drehgestell 9 der Hängervorderachse 8. Das Schwenklager weist am Lenkerende eine Öse und am Drehgestell einen beidseitig gehaltenen Zapfen auf. Sowohl Öse, als auch Zapfen sind so gestaltet, dass neben einer horizontalen Schwenkbewegung auch eine Nickbewegung möglich ist. Das Schwenklager vermittelt der Lenkverbindung zwischen dem Motorwagen und dem Anhänger die bei Kurvenfahrten erwünschte Bewegungsfreiheit, wie dies in Fig. 3 dargestellt ist.

Die vorstehende Schilderung macht klar, dass die Zuggabel und der Lenker jeweils einander entgegengerichtet angelenkt und gelagert sind.

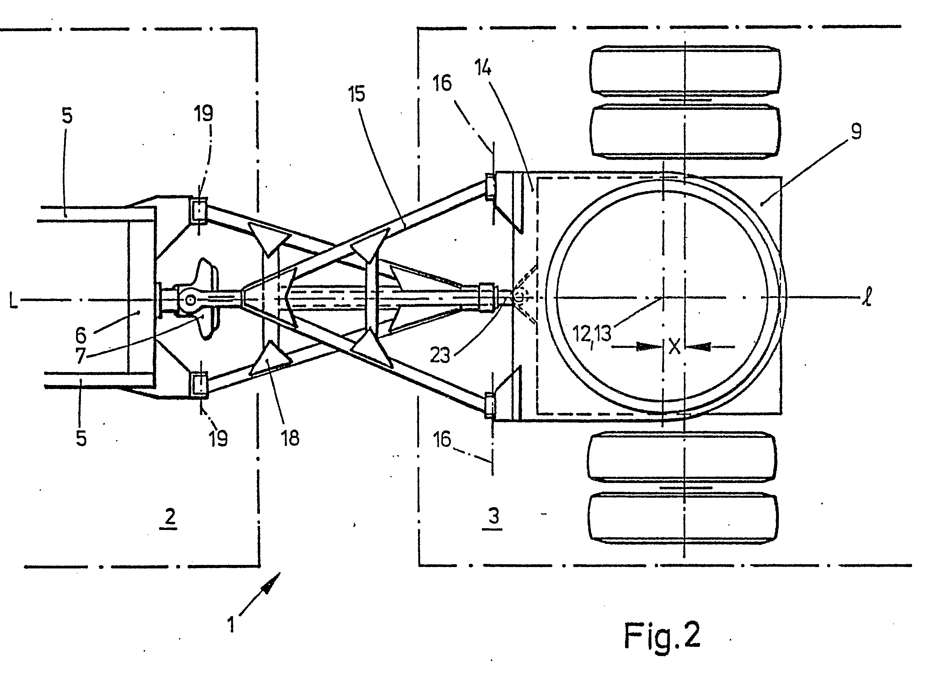

Der Endabschnitt 23 ist gegenüber dem restlichen Lenker im Sinne einer Abstandsvergrösserung zum Heck des Motorwagens 2 durch Federkraft beaufschlagt. Der Anlenkpunkt des Schwenklagers 24 befindet sich bei fluchtendem Motorwagen 2 und Anhänger 3 zwischen der Anhängerkupplung des Motorwagens und der Drehachse 12 bzw. 13 des ersten und zweiten Drehringes. Im vorliegenden Fall ist der Lenkungspunkt in Fahrtrichtung gesehen vor einer durch die Anhängerschwenkachse 16 der Zuggabel 15 definierten vertikalen Ebene angeordnet und befindet sich wie Figuren 2 und 3 zeigen in der Draufsicht gesehen ausserhalb der beiden Drehringe 10 und 11.

Der erfindungsgemässe Lastzug weist einen verkürzten Abstand a zwischen dem Heck des Motorwagens und dem Vorderende des Anhängers auf. Die Zuggabel ist rein für die Übertragung der Zug- und Schubkräfte verantwortlich, während der Lenker 18 das Lenken und gewünschte Nachführen des Anhängers hinter dem Heck des Motorwagens sicherstellt. Fig. 3 zeigt den Bereich zwischen dem Motorwagen 2 und einem dazu stark abgewinkelten Anhänger 3. Die Längsmittenachse L des Motorwagens nimmt im gezeigten Fall zu der Längsmittelachse 1 des Anhängers ungefähr einen Winkel von 90° ein. Trotz dieser starken Einknickung zwischen dem Motorwagen und dem Anhänger hat sich aufgrund der erfindungsgemässen Lenkeranordnung das Drehgestell mit den Drehachsen 12 und 13 lediglich um den Betrag b an das Heck des Motorwagens herangeschoben. Dies macht deutlich, wie sehr der Anhänger durch den Lenker 18 gezwungen wird, dem Heck des Motorwagens zu folgen. In Fig. 3 ist auch der Schwenkkreis der äussersten Fahrzeugkanten des Anhängers 3 eingezeichnet. Es ist zu erkennen, dass ein Durchschwenken bei Kurvenfahrten mühelos sichergestellt ist.

Da die Vorderachse 8 des Hängers nicht zwangsgelenkt ist, kann sie sich frei nach dem Spiel der Kräfte so einstellen, bis sie auf den gemeinsamen Krümmungsmittelpunkt aller Achsen des Lastzuges zeigt. Ein Radieren der Räder bei Kurvenfahrten ist deshalb ausgeschlossen.

Die Erfindung ist nicht auf die gezeigte Ausführungsform beschränkt. Es ist insbesondere denkbar, die Drehringe unterschiedlich gross zu gestalten und sie jeweils hintereinander oder ineinander anzuordnen. Des weiteren vermittelt die Lage des Anlenkpunktes 24 eine Möglichkeit, das Lenkverhalten des Anhängers direkter oder weniger direkt zu gestalten.

**Patentansprüche**

1. Zugverbindung für einen Lastzug (1), der einen wenigstens zweiachsigen Motorwagen (2) und einen wenigstens zweiachsigen Anhänger (3) umfasst, dessen Vorderachse (8) ein Drehgestell (9) mit einem ersten Drehring (10) aufweist, dem im Vorderachsbereich ein zweiter Drehring (11) zugeordnet ist, der zum Zwecke der Abstandsverringerung zwischen dem Motorwagen (2) und dem Anhänger (3) über eine gekürzte Zuggabel (15) die Zugverbindung zum Motorwagen (2) herstellt, dadurch gekennzeichnet, dass am Heck des Motorwagens (2) seitensteif ein Lenker (18) gelagert ist, der in einer zur Zuggabel (15) in etwa parallelen Ebene nach rückwärts führt und an seinem freien Ende einen in Richtung der Längsmittenachse (L) des Motorwagens (2) teleskopartig verfahrbaren Endabschnitt (23) mit einem auf der Längsmittenachse (L) befindlichen Schwenklager (24) aufweist, mit dessen Hilfe er mit dem Drehgestell (9) der Vorderachse (8) um eine vertikale und horizontale Achse verschwenkbar verbunden ist, und dass die Zuggabel (15) in an sich bekannter Art am Motorwagen (2) angekuppelt ist.

2. Zugverbindung nach Anspruch 1, dadurch gekennzeichnet, dass die Zuggabel (15) an einem Befestigungselement (14) zwischen dem ersten und zweiten Drehring gelagert ist.

3. Zugverbindung nach Anspruch 2, dadurch gekennzeichnet, dass die Zuggabel (15) die an sich bekannte Dreiecksform aufweist und mit der Basis des Dreiecks an dem Befestigungselement (14) vertikal um eine horizontale Achse (16) verschwenkbar gelagert ist.

4. Zugverbindung nach wenigstens einem der Ansprüche 1 bis 3, dadurch gekennzeichnet, dass der Lenker (18) dreiecksförmig gestaltet ist und mit der Basis des Dreiecks am Heck des Motorwagens (2) vertikal um eine horizontale Achse schwenkbar gelagert ist.

5. Zugverbindung nach wenigstens einem der Ansprüche 1 bis 4, dadurch gekennzeichnet, dass der Endabschnitt (23) gegenüber dem restlichen Lenker (18) im Sinne einer Abstandsvergrösserung zum Heck des Motorwagens (2) kraftbeaufschlagt ist.

6. Zugverbindung nach wenigstens einem der Ansprüche 1 bis 5, dadurch gekennzeichnet, dass am Heck des Motorwagens (2) für die Verbindung der Zuggabel (15) und des Lenkers (18) mit dem Motorwagen Schnellkupplungen (7) vorgesehen sind.

7. Zugverbindung nach wenigstens einem der Ansprüche 1 bis 6, dadurch gekennzeichnet, dass der Lenker (18) unterhalb der Zuggabel (15) angeordnet ist.

8. Zugverbindung nach wenigstens einem der Ansprüche 1 bis 7, dadurch gekennzeichnet, dass der Lenker über Lenkungsdämpfer am Drehgestell (9) abgestützt ist.

9. Zugverbindung nach wenigstens einem der Ansprüche 1 bis 8, dadurch gekennzeichnet, dass der erste Drehring (10) in der gleichen Ebene liegt wie der zweite Drehring (11) oder gegenüber diesem tiefer angeordnet ist.

10. Zugverbindung nach wenigstens einem der Ansprüche 1 bis 9, dadurch gekennzeichnet, dass die Drehachse (13) des zweiten Drehrings (11) in Richtung der Längsmittelebene (1) in Fahrtrichtung gesehen vor der Drehachse (12) des ersten Drehrings (10) liegt.

11. Zugverbindung nach wenigstens einem der Ansprüche 1 bis 10, dadurch gekennzeichnet, dass die Drehachsen (12, 13) der beiden Drehringe (10, 11) koaxial verlaufen.

12. Zugverbindung nach wenigstens einem der Ansprüche 1 bis 11, dadurch gekennzeichnet, dass der Anlenkpunkt des Schwenklagers (24) bei fluchtendem Motorwagen (2) und Anhänger (3) zwischen der Anhängerkupplung des Motorwagens (2) und der Drehachse (12, 13) des ersten oder zweiten Drehrings (10, 11) des Anhängers (3) liegt.

**Claims**

1. Towing connection for a truck-trailer combination (1) which comprises a motor vehicle (2) which has at least two axles and a trailer (3) which has at least two axles, the front axle (8) of which has a turntable mounting (9) with a first turntable ring (10) to which is allocated, in the front axle area, a second turntable ring (11) which, for the purpose of reducing the distance between the motor vehicle (2) and the trailer (3), makes the towing connection to the motor vehicle (2) via a shortened forked tow bar (15), characterized in that a guide link (18) is mounted in a laterally rigid manner on the rear of the motor vehicle (2), which guide link (18) leads backwards in a plane approximately parallel to the forked tow bar (15) and, at its free end, has an end section (23) which can be displaced telescope-like in the direction of the longitudinal centre axis (L) of the motor vehicle (2) and has a pivot bearing (24) which is located on the longitudinal centre axis (L) and by means of which it is connected to the turntable mounting (9) of the front axle (8) such that it can be pivoted about a vertical and horizontal axis, and that the forked tow bar (15) is coupled to the motor vehicle (2) in a manner known per se.

2. Towing connection according to Claim 1, characterized in that the forked tow bar (15) is mounted on a fastening element (14) between the first and second turntable ring.

3. Towing connection according to Claim 2, characterized in that the forked tow bar (15) has the triangular form known per se and is mounted with the base of the triangle on the fastening element (14) such that it can be pivoted vertically about a horizontal axis (16).

4. Towing connection according to at least one of Claims 1 to 3, characterized in that the guide link (18) is formed in a triangular shape and is mounted with the base of the triangle on the rear of the motor vehicle (2) such that it can be pivoted vertically about a horizontal axis.

5. Towing connection according to at least one of Claims 1 to 4, characterized in that the end section (23), relative to the rest of the guide link (18), is acted upon by a force tending to increase the distance from the rear of the motor vehicle (2).

6. Towing connection according to at least one of Claims 1 to 5, characterized in that quick-action couplings (7) are provided on the rear of the motor vehicle (2) for connecting the forked tow bar (15) and the guide link (18) to the motor vehicle.

7. Towing connection according to at least one of Claims 1 to 6, characterized in that the guide link (18) is arranged beneath the forked tow bar (15).

8. Towing connection according to at least one of Claims 1 to 7, characterized in that the guide link is supported on the turntable mounting (9) via steering dampers.

9. Towing connection according to at least one of Claims 1 to 8, characterized in that the first turntable ring (10) lies in the same plane as the second turntable ring (11) or is arranged deeper relative to the latter.

10. Towing connection according to at least one of Claims 1 to 9, characterized in that the axis (13) of rotation of the second turntable ring (11), in the direction of the longitudinal centre plane (L), as viewed in the direction of travel, lies in front of the axis (12) of rotation of the first turntable ring (10).

11. Towing connection according to at least one of Claims 1 to 10, characterized in that the axes (12, 13) of rotation of the two turntable rings (10, 11) run coaxially.

12. Towing connection according to at least one of Claims 1 to 11, characterized in that the articulation point of the pivot bearing (24), when the motor vehicle (2) and the trailer (3) are in alignment, lies between the trailer coupling of the motor vehicle (2) and the axes (12, 13) of rotation of the first or second turntable ring (10, 11) of the trailer (3).

**Revendications**

1. Attelage pour un train routier (1) qui comporte un véhicule moteur (2) ayant au moins deux essieux et une remorque (3) ayant au moins deux essieux, dont l'essieu avant (8) comporte une plate-forme de rotation (9) avec une première couronne de rotation (10) à laquelle est associée, dans la zone de l'essieu avant, une seconde couronne de rotation (11) qui constitue l'attelage avec le véhicule moteur (2) par l'intermédiaire d'une flèche de remorque (15) raccourcie afin de réduire la distance entre le véhicule moteur (2) et la remorque (3), caractérisé en ce que, à l'arrière du véhicule à moteur (2) est monté, rigide latéralement, un bras (18) qui va vers l'arrière dans un plan sensiblement parallèle à la flèche de remorque (15) et qui comporte, à son extrémité libre, une portion terminale (23) pouvant se déplacer télescopiquement dans le sens de l'axe longitudinal médian (L) du véhicule moteur (2) et qui est munie d'un palier d'articulation (24) situé sur cet axe longitudinal médian (L), à l'aide duquel palier ce bras est relié à pivotement à la plate-forme de rotation (9) de l'essieu avant (8) autour d'un axe vertical et d'un axe horizontal, et en ce que la flèche de remorque (15) est couplée au véhicule moteur (2) de façon connue en soi.

2. Attelage selon la revendication 1, caractérisé en ce que la flèche de remorque (15) est montée sur un élément de fixation (14) entre la première couronne de rotation et la deuxième couronne.

3. Attelage selon la revendication 2, caractérisé en ce que la flèche de remorque (15) a la forme triangulaire connue en soi et est montée par la base du triangle sur l'élément de fixation (14) en pouvant pivoter verticalement autour d'un axe horizontal (16).

4. Attelage selon au moins l'une des revendications 1 à 3, caractérisé en ce que le bras (18) a une forme triangulaire et est monté par la base du triangle à l'arrière du véhicule moteur (2) en pouvant pivoter verticalement autour d'un axe horizontal.

5. Attelage selon l'une au moins des revendications 1 à 4, caractérisé en ce que la portion terminale (23) est soumise par rapport au reste du bras (18) à une force tendant à augmenter la distance à l'arrière du véhicule moteur (2).

6. Attelage selon l'une au moins des revendications 1 à 5, caractérisé en ce qu'on prévoit à l'arrière du véhicule moteur (2) des raccords rapides (7) pour relier au véhicule moteur la flèche de remorque (15) et le bras (18).

7. Attelage selon l'une au moins des revendications 1 à 5, caractérisé en ce que le bras (18) est placé en dessous de la flèche de remorque (15).

8. Attelage selon l'une au moins de revendications 1 à 7, caractérisé en ce que le bras s'appuie sur la plate-forme de rotation (9) par des amortisseurs de direction.

9. Attelage selon l'une au moins des revendications 1 à 8, caractérisé en ce que la première couronne de rotation (10) se trouve dans le même plan que la deuxième couronne de rotation (11) ou est située plus bas que celle-ci.

10. Attelage selon l'une au moins des revendications 1 à 9, caractérisé en ce que l'axe de rotation (13) de la deuxième couronne de rotation (11) est placé en avant de l'axe de rotation (12) de la première couronne de rotation (10) dans le sens du plan longitudinal médian (L), vu dans le sens de la marche.

11. Attelage selon l'une au moins des revendications 1 à 10, caractérisé en ce que les axes de rotation (12, 13) des deux couronnes de rotation (10, 11) sont coaxiaux.

12. Attelage selon l'une au moins des revendications 1 à 11, caractérisé en ce que le point d'articulation du palier d'articulation (24) se trouve, lorsque le véhicule moteur (2) et la remorque (3) sont alignés, entre l'accrochage de la remorque sur le véhicule moteur (2) et l'axe de rotation (12, 13) de la première ou de la deuxième couronne de rotation (10, 11) de la remorque (3).

Fig. 1

Fig.2

0 066 269

Fig.3

0 066 269